(19) Europäisches Patentamt
European Patent Office
Office européen des brevets

(11) EP 4 354 360 A1

(12) EUROPEAN PATENT APPLICATION
published in accordance with Art. 153(4) EPC

(43) Date of publication:
17.04.2024 Bulletin 2024/16

(51) International Patent Classification (IPC):
G06N 20/00 (2019.01)

(21) Application number: 21945070.7

(52) Cooperative Patent Classification (CPC):
G06N 20/00

(22) Date of filing: 08.06.2021

(86) International application number:
PCT/JP2021/021813

(87) International publication number:
WO 2022/259393 (15.12.2022 Gazette 2022/50)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Nippon Telegraph And Telephone
Corporation
Chiyoda-ku
Tokyo 100-8116 (JP)

(72) Inventors:
• TSUNODA, Keisuke
Musashino-shi, Tokyo 180-8585 (JP)
• KODAMA, Midori
Musashino-shi, Tokyo 180-8585 (JP)
• ARAI, Naoki
Musashino-shi, Tokyo 180-8585 (JP)
• MAEJIMA, Sotaro
Musashino-shi, Tokyo 180-8585 (JP)
• OBANA, Kazuaki
Musashino-shi, Tokyo 180-8585 (JP)

(74) Representative: DREISS Patentanwälte PartG
mbB
Friedrichstraße 6
70174 Stuttgart (DE)

(54) **LEARNING METHOD, ESTIMATION METHOD, LEARNING DEVICE, ESTIMATION DEVICE, AND PROGRAM**

(57) A learning device generates a first learned model by subjecting a learning model to learning such that a correlation coefficient between a first explanatory variable for learning and an explained variable output from the learning model is maximized when the learning model that outputs an explained variable in a case where an explanatory variable is input is subjected to learning on the basis of first learning data representing a pair of the first explanatory variable for learning and a first explained variable for learning. When the first learned model is subjected to relearning on the basis of the second learning data representing the pair of the second explanatory variable for learning and the second explained variable for learning, the learning device generates the second learned model by subjecting the first learned model to relearning such that the error between the second explained variable for learning and the explained variable output from the first learned model is minimized.

Fig. 2

EP 4 354 360 A1

**Description**

Technical Field

The disclosed technology relates to a learning method, an estimation method, a learning device, an estimation device, and a program.

Background Art

Conventionally, there is a technology of estimating an unknown value (hereinafter, also simply referred to as an "explained variable") by inputting a predetermined value (hereinafter, also simply referred to as an "explanatory variable") to a learned model subjected to machine learning in advance.

When such a technology is used, there is a case where the number of pieces of learning data, which is a pair of an explained variable for learning and an explanatory variable for learning, is small, and the number of pieces of learning data is not sufficient. In this case, for example, a transfer learning process or a fine-tuning process may be executed on a learned model.

In a case where transfer learning is executed, first, a learned model is created (hereinafter, also simply referred to as "initial learning") on the basis of data related to learning data. Learning is performed again (hereinafter, also referred to as "relearning") on a part or the whole of the learned model on the basis of a small amount of learning data. Consequently, a learned model for estimating an explained variable from an explanatory variable is obtained (refer to, for example, Non Patent Literature 1).

Citation List

Non Patent Literature

Non Patent Literature 1: Yoshikazu Nigaki, Katsufumi Inoue, Michifumi Yoshioka, "The DNN Learning Method for Few Training Data via Knowledge Transfer", IEEJ Journal C, Vol. 140, No.6, pp.664-672, 2020.

Summary of Invention

Technical Problem

In the related art including Non Patent Literature 1, a numerical or probabilistic error such as a mean squared error, a classification accuracy rate, or a cross entry is used as a loss function used for learning and evaluation of a learning model in both of initial learning and relearning in transfer learning or fine-tuning.

However, even if a correlation between an explanatory variable and an explained variable is constant, a magnitude relationship may change between learning data at the time of initial learning and learning data at the time of relearning. In this case, even if a learned model is generated by minimizing numerical and probabilistic errors, there is a problem that a highly accurate learned model cannot be generated.

For example, as an example, a case is assumed in which a temperature of a predetermined location of an air conditioning facility is used as an explanatory variable and a temperature of a predetermined location in a room is used as an explained variable. In this case, it is assumed that there is little learning data for the summer and much learning data for the winter. In this case, for example, a learned model is generated by performing initial learning on a learning model on the basis of the learning data for the winter, and a learned model for the summer is generated by performing relearning on the learned model on the basis of learning data for the summer. The learned model for the summer is a learned model for estimating a temperature of a predetermined location in the room in the summer from a temperature of a predetermined location in the air conditioning facility in the summer.

However, in the winter, there is a magnitude relationship in which the temperature of the predetermined location in the air conditioning facility is higher than the temperature of the predetermined location in the room. On the other hand, in the summer, there is a magnitude relationship in which the temperature of a predetermined location of the air conditioning facility is lower than the temperature of a predetermined location in the room. This magnitude relationship also appears in the learning data. Thus, as described above, even if a numerical or stochastic loss function such as a mean squared error is used when the initial learning is executed on the basis of the learning data for the winter and the relearning is executed on the basis of the learning data for the summer to generate the learned model for the summer, there is a problem that it is not possible to generate an accurate learned model for estimating an explained variable from an explanatory variable due to a change between a magnitude relationship between an explanatory variable and an explained variable of the learning data used for the initial learning and a magnitude relationship between an explanatory variable and an explained variable of the learning data used for the relearning.

The disclosed technology has been made in view of the above circumstances, and an object thereof is to generate a learned model with high accuracy for estimating an explained variable from an explanatory variable even in a case where there is a change between a magnitude relationship between an explanatory variable and an explained variable of learning data used for initial learning and a magnitude relationship between an explanatory variable and an explained variable of learning data used for relearning.

Solution to Problem

According to a first aspect of the present disclosure, there is provided a learning method of causing a computer to execute processes of generating a first learned model by subjecting a learning model to learning such that a correlation coefficient between a first explained variable for learning and an explained variable output from the learning model is maximized when the learning model that outputs an explained variable in a case where an explanatory variable is input is subjected to learning on the basis of first learning data representing a pair of a first explanatory variable for learning and the first explained variable for learning; and generating a second learned model by subjecting the first learned model to relearning such that an error between a second explained variable for learning and an explained variable output from the first learned model is minimized when the first learned model is subjected to the relearning on the basis of second learning data representing a pair of a second explanatory variable for learning and the second explained variable for learning.

According to a second aspect of the present disclosure, there is provided a learning device including a first learning unit that generates a first learned model by subjecting a learning model to learning such that a correlation coefficient between a first explained variable for learning and an explained variable output from the learning model is maximized when the learning model that outputs an explained variable in a case where an explanatory variable is input is subjected to learning on the basis of first learning data representing a pair of a first explanatory variable for learning and the first explained variable for learning; and a second learning unit that generates a second learned model by subjecting the first learned model to relearning such that an error between a second explained variable for learning and an explained variable output from the first learned model is minimized when the first learned model is subjected to the relearning on the basis of second learning data representing a pair of a second explanatory variable for learning and the second explained variable for learning.

Advantageous Effects of Invention

According to the disclosed technology, it is possible to generate a learned model with high accuracy for estimating an explained variable from an explanatory variable even in a case where there is a change between a magnitude relationship between an explanatory variable and an explained variable of learning data used for initial learning and a magnitude relationship between an explanatory variable and an explained variable of learning data used for relearning.

Brief Description of Drawings

Fig. 1 is a block diagram illustrating a hardware configuration of a learning device 10 according to the present embodiment.
Fig. 2 is a block diagram illustrating an example of a functional configuration of the learning device 10 according to the present embodiment.
Fig. 3 is a flowchart illustrating a flow of a learning process performed by the learning device 10 according to the present embodiment.
Fig. 4 is a flowchart illustrating a flow of an estimation process performed by the learning device 10 according to the present embodiment.
Fig. 5 is a diagram for describing Example 1.
Fig. 6 is a diagram for describing Example 1.
Fig. 7 is a diagram for describing Example 1.
Fig. 8 is a diagram for describing Example 1.
Fig. 9 is a diagram for describing Example 1.
Fig. 10 is a diagram for describing Example 2.
Fig. 11 is a diagram for describing Example 2.
Fig. 12 is a diagram for describing Example 2.
Fig. 13 is a diagram for describing Example 2.

Fig. 14 is a diagram for describing Example 2.
Fig. 15 is a diagram for describing Example 2.

Description of Embodiments

Hereinafter, an example of an embodiment of the disclosed technology will be described with reference to the drawings. In the drawings, the same or equivalent constituents and portions are denoted by the same reference signs. Dimensional ratios in the drawings are exaggerated for convenience of description, and may be different from actual ratios.

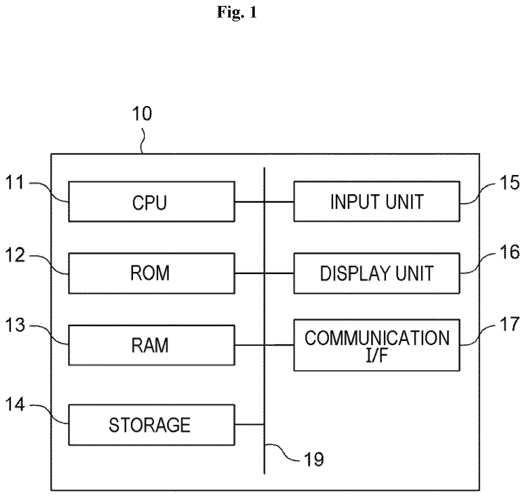

Fig. 1 is a block diagram illustrating a hardware configuration of a learning device 10. As illustrated in Fig. 1, the learning device 10 includes a central processing unit (CPU) 11, a read only memory (ROM) 12, a random access memory (RAM) 13, a storage 14, an input unit 15, a display unit 16, and a communication interface (I/F) 17. The constituents are communicatively connected to each other via a bus 19.
The CPU 11 is a central processing unit, and executes various programs or controls each unit. That is, the CPU 11 reads a program from the ROM 12 or the storage 14 and executes the program by using the RAM 13 as a work area. The CPU 11 controls each of the above constituents and executes various calculation processes according to the program stored in the ROM 12 or the storage 14. In the present embodiment, the ROM 12 or the storage 14 stores a program for making a learning model to learn to generate a learned model and a program for estimating an explained variable from an explanatory variable by using the learned model.
The ROM 12 stores various programs and various types of data. The RAM 13 temporarily stores programs or data as a work area. The storage 14 includes a storage device such as a hard disk drive (HDD) or a solid state drive (SSD) and stores various programs including an operating system and various types of data.
The input unit 15 includes a pointing device such as a mouse and a keyboard and is used to perform various inputs.
The display unit 16 is, for example, a liquid crystal display and displays various types of information. The display unit 16 may function as the input unit 15 by adopting a touchscreen system.
The communication interface 17 is an interface for communicating with another device such as a portable terminal. For the communication, for example, a wired communication standard such as Ethernet (registered trademark) or FDDI, or a wireless communication standard such as 4G, 5G, or Wi-Fi (registered trademark) is used.
Next, a functional configuration of the learning device 10 will be described.

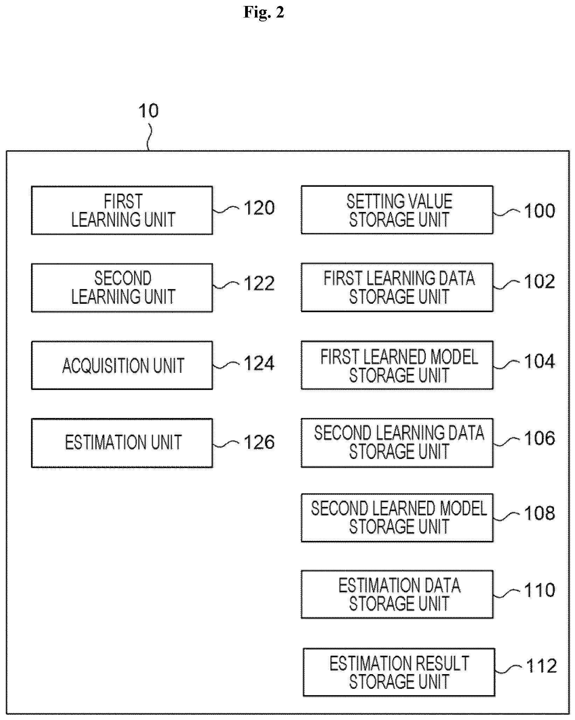

Fig. 2 is a block diagram illustrating an example of a functional configuration of the learning device 10.
As illustrated in Fig. 2, the learning device 10 includes, as a functional configuration, a setting value storage unit 100, a first learning data storage unit 102, a first learned model storage unit 104, a second learning data storage unit 106, a second learned model storage unit 108, an estimation data storage unit 110, an estimation result storage unit 112, a first learning unit 120, a second learning unit 122, an acquisition unit 124, and an estimation unit 126. Each functional configuration is realized by the CPU 11 reading a program stored in the ROM 12 or the storage 14, loading the program to the RAM 13, and executing the program.
The setting value storage unit 100 stores various setting values. Specifically, the setting value storage unit 100 stores details of an explanatory variable and an explained variable of learning data used in the first learning unit 120 and the second learning unit 122 that will be described later, ranges of the explanatory variable and the explained variable, the type of loss used in a learning process, information regarding a second learned model used in the estimation unit 126 that will be described later, and details of an estimation explained variable used in the estimation unit 126 that will be described later. The learning device 10 acquires various setting values via the communication interface 17 and stores the various setting values in the setting value storage unit 100. The setting values stored in the setting value storage unit 100 are read by each unit that will be described later.
The first learning data storage unit 102 stores first learning data that is a pair of a first explanatory variable for learning and a first explained variable for learning. The first learning data is learning data used in initial learning by the first learning unit 120 that will be described later. The data used in the present embodiment is, for example, time-series data.
The first learned model storage unit 104 stores a first learned model generated by the first learning unit 120 that will be described later. The first learned model is a learned model generated through initial learning on the basis of the first learning data stored in the first learning data storage unit 102.
The second learning data storage unit 106 stores second learning data that is a pair of a second explanatory variable for learning and a second explained variable for learning. The second learning data is learning data used in relearning by the second learning unit 122 that will be described later.
The second learned model storage unit 108 stores a second learned model generated by the second learning unit 122 that will be described later. The second learned model is a learned model generated through relearning on the basis of the second learning data stored in the second learning data storage unit 106.
The estimation data storage unit 110 stores explanatory variables used for estimation by the estimation unit 126 that will be described later.

The estimation result storage unit 112 stores an explained variable estimated by the estimation unit 126.

On the basis of the setting value stored in the setting value storage unit 100 and the plurality of pieces of first learning data stored in the first learning data storage unit 102, the first learning unit 120 subjects a learning model that outputs an explained variable in a case where an explanatory variable is input to initial learning. In this case, the first learning unit 120 generates the first learned model by making the learning model to learn such that a correlation coefficient between the first explained variable for learning and an explained variable output from the learning model during learning or the first learned model is maximized. The first learning unit 120 stores the first learned model in the first learned model storage unit 104. The first learned model storage unit 104 may store a plurality of first learned models. In this case, the second learning unit 122 that will be described later reads, on the basis of an ID of a first learned model, the learned model corresponding to the ID from the plurality of learned models stored in the first learned model storage unit 104.

The second learning unit 122 subjects the first learned model to relearning on the basis of the setting values stored in the setting value storage unit 100 and the plurality of pieces of learning data stored in the second learning data storage unit 106. In this case, the second learning unit 122 generates the second learned model by subjecting the first learned model to relearning such that an error between the second explained variable for learning and an explained variable output from the first learned model during learning or the second learned model is minimized. The second learning unit 122 stores the second learned model in the second learned model storage unit 108.

The acquisition unit 124 acquires an explanatory variable that is an estimation target stored in the estimation data storage unit 110.

The estimation unit 126 acquires an explained variable for the explanatory variable that is an estimation target by inputting the explanatory variable that is an estimation target acquired by the acquisition unit 124 to the second learned model stored in the second learned model storage unit 108. The estimation unit 126 stores the explained variable for the explanatory variable that is an estimation target in the estimation result storage unit 112.

Next, actions of the learning device 10 will be described.

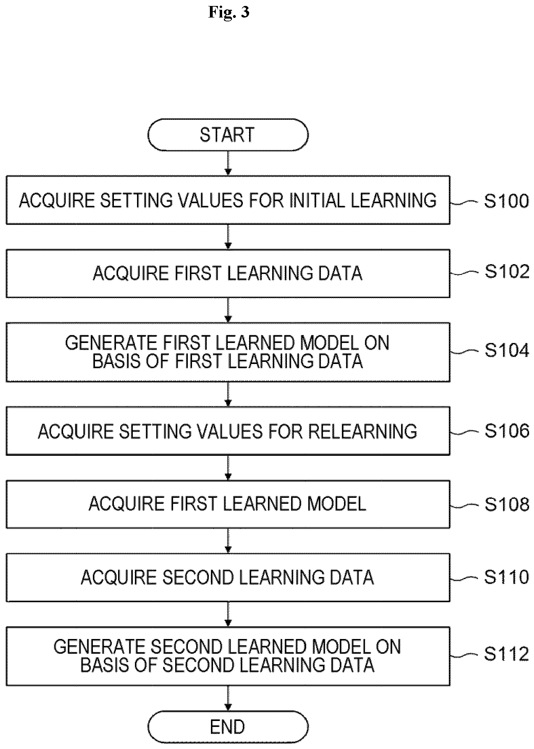

Fig. 3 is a flowchart illustrating a flow of a learning process performed by the learning device 10. A learning process is performed by the CPU 11 reading a learning process program from the ROM 12 or the storage 14, loading the learning process program to the RAM 13, and executing the learning process program.

In step S100, the CPU 11 as the first learning unit 120 acquires setting values for initial learning from the setting value storage unit 100. For example, the CPU 11 acquires, as setting values, information including information regarding the type of loss used at the time of initial learning, information regarding the data type of the first learning data that is a pair of the first explanatory variable and the first explained variable used at the time of initial learning, and information regarding a period of the learning data.

In step S102, the CPU 11 as the first learning unit 120 acquires the first learning data from the first learning data storage unit 102 on the basis of the setting values acquired in step S100. For example, the CPU 11 acquires the first learning data for a predetermined period. The first learning data is a pair of a first explanatory variable X' for learning and a first explained variable Y' for learning.

In step S 104, the CPU 11 as the first learning unit 120 generates a first learned model by subjecting a learning model to initial learning on the basis of the first learning data acquired in step S 102. Specifically, the CPU 11 generates a first learned model M by subjecting the learning model to initial learning such that a correlation coefficient between an explained variable

$$\widehat{Y'}$$

output from the first learned model M when the first explanatory variable X' for learning is input to the first learned model M during learning and the first explained variable Y' for learning, calculated according to the following Expression (1), is maximized.

[Math. 1]

$$\widehat{Y'} = M\,X' \quad \cdot \cdot \cdot (1)$$

For example, the CPU 11 selects a function $1/(r+1)$ including a correlation coefficient $r$ as a loss function on the basis of the information regarding the type of loss used at the time of initial learning among the setting values acquired in step S100. The CPU 11 generates the first learned model M by subjecting the learning model to initial learning such that the loss function $1/(r+1)$ is minimized.

The first learned model of the present embodiment is a multilayer neural network and is expressed by the following expression. $I_1, I_2,...,$ and $I_n$ in the following expression represent parameters of layers of the multilayer neural network. The following expression represents an n-layer neural network.

[Math. 2]

$$M=\{l_1, l_2, ..., l_n\}$$

In the following description, a character with "^" added to a symbol (for example, X) in a mathematical expression may be represented as ^X.

The CPU 11 stores the generated first learned model M in the first learned model storage unit 104.

In step S106, the CPU 11 as the second learning unit 122 acquires setting values for relearning from the setting value storage unit 100. For example, the CPU 11 acquires, as setting values, information including the date and time of relearning start or information regarding immediate relearning start, information regarding the type of loss used at the time of relearning, an ID of the first learned model, information regarding the data type of the second learning data that is a pair of the second explanatory variable and the second explained variable used in relearning, information regarding a period of the learning data, and information n' of a layer on which relearning is to be performed. The following process is executed according to the date and time of relearning start or the information regarding immediate relearning start.

In step S108, the CPU 11 as the second learning unit 122 acquires the first learned model M stored in the first learned model storage unit 104 on the basis of the setting values acquired in step S106. For example, the CPU 11 reads the first learned model M corresponding to the ID from the plurality of learned models stored in the first learned model storage unit 104 on the basis of the ID of the first learned model acquired in step S106.

In step S110, the CPU 11 as the second learning unit 122 acquires second learning data stored in the second learning data storage unit 106 on the basis of the setting values acquired in step S106. The second learning data is a pair of a second explanatory variable X" for learning and a second explained variable Y" for learning.

In step S112, the CPU 11 as the second learning unit 122 generates a second learned model M' by subjecting the first learned model M acquired in step S108 to relearning on the basis of the second learning data acquired in step S110. Specifically, the CPU 11 generates the second learned model M' by subjecting the first learned model M to relearning such that an error between an explained variable ^Y" output from the second learned model M' when the second explanatory variable X" for learning is input to the second learned model M' during learning and the second explained variable Y" for learning, calculated according to the following Expression (2), is minimized.

[Math. 3]

$$\widehat{Y''} = M'X'' \cdot \cdot \cdot (2)$$

For example, the CPU 11 selects a mean squared error as a loss function on the basis of the information regarding the type of loss used at the time of relearning among the setting values acquired in step S106. The CPU 11 generates the second learned model M' by subjecting the first learned model M to relearning such that the mean squared error is minimized.

When the first learned model M is subjected to relearning such that the error between the explained variable ^Y" and the second explained variable Y" for learning is minimized, the CPU 11 generates the second learned model M' by fixing a part of parameters of the first learned model M and changing parameters different from the part of parameters of the first learned model M. Specifically, the CPU 11 generates the following second learned model M' on the basis of the information n' of the layer subjected to relearning among the setting values acquired in step S106. l' in the following second learned model M' indicates that the parameters from the (n-n'+1)-th layer to the n-th layer of the first learned model M have been updated through relearning.

[Math. 4]

$$M'=\{l_1, l_2, ..., l'_{n-n'+1}, ..., l'_n\}$$

The CPU 11 stores the generated second learned model M' in the second learned model storage unit 108.

By executing the learning process routine in Fig. 3, the second learned model M' is stored in the second learned model storage unit 108 and used in an estimation process that will be described later.

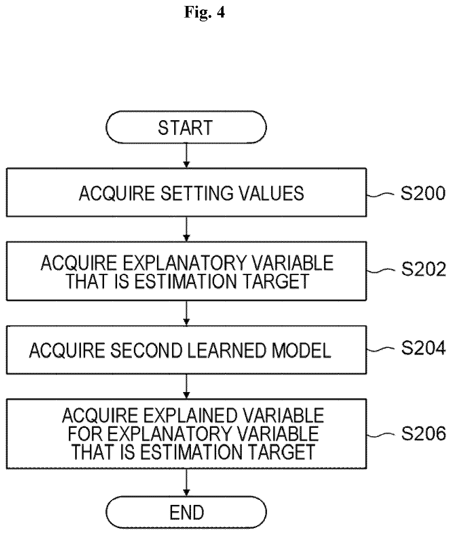

Fig. 4 is a flowchart illustrating a flow of an estimation process performed by the learning device 10. The CPU 11 reads an estimation process program from the ROM 12 or the storage 14, and performs the estimation process by loading the estimation process program to the RAM 13 and executing the estimation process program.

In step S200, the CPU 11 as the acquisition unit 124 acquires estimation setting values from the setting value storage unit 100. For example, the CPU 11 acquires, as setting values, information including the date and time of estimation start or information regarding immediate estimation start, an ID of the second learned model M' used at the time of estimation, information regarding the data type of an explained variable that is an estimation target, and information regarding a period of the explained variable. The following process is executed according to the date and time of estimation start or the information regarding immediate estimation start.

In step S202, the CPU 11 as the acquisition unit 124 acquires the explanatory variable X that is an estimation target from the estimation data storage unit 110 on the basis of the setting values acquired in step S200.

In step S204, the CPU 11 as the acquisition unit 124 acquires the second learned model M' from the second learned model storage unit 108 on the basis of the setting values acquired in step S200.

In step S206, the CPU 11 as the estimation unit 126 inputs the explanatory variable X that is an estimation target acquired in step S202 to the second learned model M' acquired in step S204, and thus acquires the explained variable ^Y for the explanatory variable X that is an estimation target according to the following Expression (3).

[Math. 5]

$$\widehat{Y} = M' X \quad \cdot \quad \cdot \quad \cdot \quad (3)$$

The CPU 11 stores the explained variable ^ Y for the estimation target explanatory variable X in the estimation result storage unit 112.

As described above, the learning device according to the embodiment generates the first learned model by subjecting the learning model to learning such that the correlation coefficient between the first explained variable for learning and the explained variable output from the learning model is maximized when the learning model which outputs the explained variable in a case where the explanatory variable is input is subjected to learning on the basis of the first learning data representing the pair of the first explanatory variable for learning and the first explained variable for learning. When the first learned model is subjected to relearning on the basis of the second learning data representing the pair of the second explanatory variable for learning and the second explained variable for learning, the learning device generates the second learned model by subjecting the first learned model to relearning such that the error between the second explained variable for learning and the explained variable output from the first learned model is minimized. Consequently, even in a case where there is a change between the magnitude relationship between the explanatory variable and the explained variable of the learning data used for the initial learning and the magnitude relationship between the explanatory variable and the explained variable of the learning data used for the relearning, it is possible to generate an accurate learned model for estimating the explained variable from the explanatory variable.

By using the above learned model, the learning device according to the embodiment can obtain an accurate estimation result by using the learned model subjected to relearning even in a case where there is a change between the magnitude relationship between the explanatory variable and the explained variable of the learning data used for initial learning and the magnitude relationship between the explanatory variable and the explained variable of the learning data used for relearning.

Example 1

In Example 1, a case where an indoor room temperature distribution is estimated from a room temperature of an indoor representative point in a wide indoor space will be described as an example. Thus, the room temperature of the representative point in the room is an explanatory variable, and the temperature distribution in the room is an explained variable.

In Example 1, a case where a room temperature of the representative point (hereinafter, simply referred to as a "representative point temperature") and room temperatures of six points (hereinafter, it is also simply referred to as a "room temperature distribution") in the indoor space are simultaneously measured for about two months in the summer of a certain year y1 will be described as an example. It is assumed that s representative point room temperature and s room temperature distribution are measured at the same location only for three days in a case where a configuration of an air conditioning facility is greatly changed in the summer of the next year y2 of the certain year y 1. In this case, while a large amount of learning data exists in the certain year y1, a small amount of learning data exists in the following year y2. On that assumption, an example in a case where a room temperature distribution for 30 days is estimated from representative point room temperatures for 30 days in the summer of the following year y2 will be described below.

A configuration of a learning device described in Example 1 is similar to that of the learning device 10 of the above embodiment. Since an operation of the learning device described in Example 1 is also similar to that of the learning device 10 of the above embodiment, an operation of the present example will be described by using the processing flows illustrated in Figs. 3 and 4.

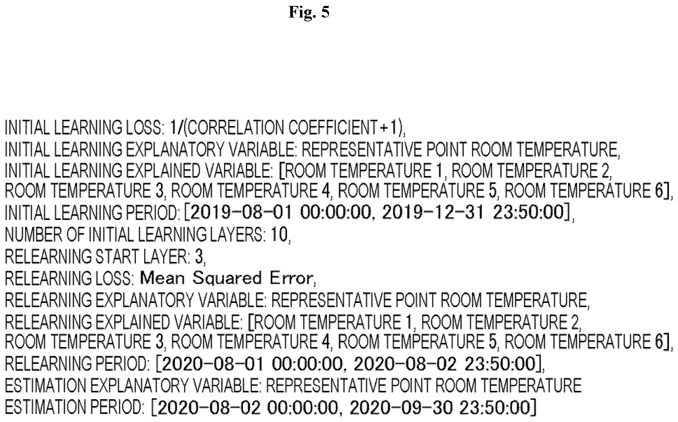

Fig. 5 illustrates details of setting values according to Example 1. The setting value storage unit 100 stores various setting values as illustrated in Fig. 5.

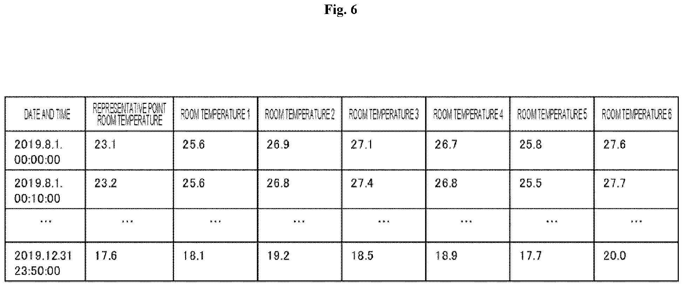

Fig. 6 illustrates first learning data for initial learning. The first learning data storage unit 102 stores first learning data as illustrated in Fig. 6.

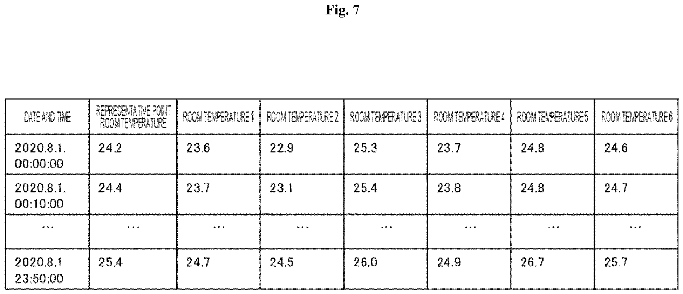

Fig. 7 illustrates second learning data for relearning. The second learning data storage unit 106 stores second learning data as illustrated in Fig. 7.

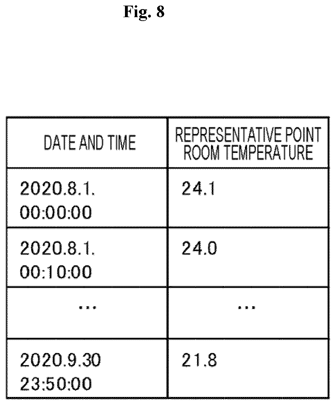

Fig. 8 illustrates vectors of explanatory variables that are estimation targets. The estimation data storage unit 110 stores vectors of explanatory variables as illustrated in Fig. 8.

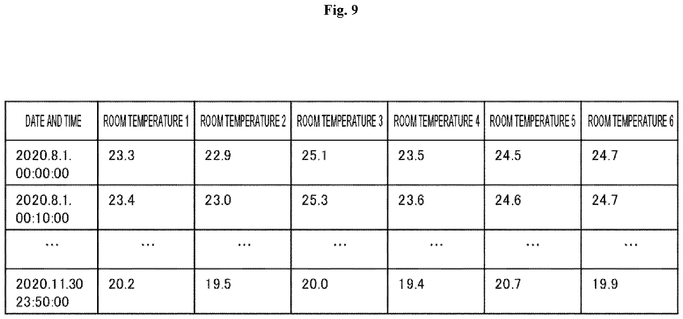

Fig. 9 illustrates vectors of estimated explained variables. The estimation result storage unit 112 stores vectors of explained variables as illustrated in Fig. 9 as estimation results.

Hereinafter, an operation of the learning device of Example 1 will be described with reference to Fig. 3.

In step S100, the CPU 11 as the first learning unit 120 acquires an initial learning loss, an initial learning explained variable, an initial learning explanatory variable, an initial learning period, and the number of initial learning layers from the setting value storage unit 100.

Specifically, the CPU 11 acquires information indicating "1/(correlation coefficient + 1)" as the initial learning loss. The CPU 11 acquires information indicating a "representative point room temperature" as the initial learning explanatory variable. The CPU 11 acquires information indicating [room temperature 1, room temperature 2, room temperature 3, room temperature 4, room temperature 5, room temperature 6] as the initial learning explained variable. The CPU 11 acquires information indicating [2019-08-01 00:00:00, 2019-10-31 23:50:00] as the initial learning period. The CPU 11 acquires "10" as the number of initial learning layers.

In step S102, the CPU 11 as the first learning unit 120 acquires the first learning data from the first learning data storage unit 102 on the basis of the setting values acquired in step S100.

Specifically, the CPU 11 acquires the representative point room temperatures during 2019-08-01 00:00:00 to 2019-10-31 23:50:00 as the first explanatory variables X' for learning and acquires the room temperatures 1 to 6 which are a room temperature distribution during 2019-08-01 00:00:00 to 2019-10-31 23:50:00, as the first explained variables Y' for learning on the basis of the initial learning explanatory variable "representative point room temperature", the explained variables for initial learning [room temperature 1, room temperature 2, room temperature 3, room temperature 4, room temperature 5, room temperature 6], and the initial learning period [2019 -08-01 00:00:00, 2019-10-31 23:50:00] among the setting values acquired in step S100.

In step S104, the CPU 11 as the first learning unit 120 generates a first learned model by subjecting a learning model to initial learning on the basis of the first learning data acquired in step S102.

Specifically, the CPU 11 subjects the neural network model M to initial learning with the number of initial learning layers of 10 layers, represented by the following expression, such that a *correlation* between the explained variable ^Y' output from the first learned model M when the first explanatory variable X' for learning is input to the first learned model M during learning and the first explained variable Y' for learning is maximized according to the above Expression (1).

[Math. 6]

$$M = \{l_1, l_2, \ldots, l_{10}\}$$

As a loss function used in initial learning, the loss function $1/(r+1)$ including the correlation coefficient r between the explained variable ^Y' and the first explained variable Y' for learning is used on the basis of the initial learning loss which is the setting value acquired in step S100.

The CPU 11 stores the generated first learned model M in the first learned model storage unit 104.

In step S106, the CPU 11 as the second learning unit 122 acquires setting values for relearning from the setting value storage unit 100. For example, the CPU 11 acquires, as setting values, a relearning start layer, a relearning loss function, a relearning explained variable, a relearning explanatory variable, and a period of learning data for relearning. Specifically, the CPU 11 acquires "3" as the relearning start layer. The CPU 11 acquires "mean squared error" as the relearning loss. The CPU 11 acquires a "representative point room temperature" as the relearning explanatory variable. The CPU 11 acquires [room temperature 1, room temperature 2, room temperature 3, room temperature 4, room temperature 5, room temperature 6] as the relearning explained variables. The CPU 11 acquires [2020-08-01 00:00:00, 2020-08-02 23:50:00] as the relearning period.

In step S108, the CPU 11 as the second learning unit 122 acquires the first learned model M stored in the first learned model storage unit 104 on the basis of the setting values acquired in step S106.

In step S110, the CPU 11 as the second learning unit 122 acquires second learning data stored in the second learning data storage unit 106 on the basis of the setting values acquired in step S106. The second learning data is a pair of a second explanatory variable X" for learning and a second explained variable Y" for learning.

Specifically, the CPU 11 acquires representative point room temperatures in the relearning period [2020.8.1. 00:00:00 to 2020-8-1 23:50:00] among the setting values acquired in step S106 as the second explanatory variables X" for learning, and acquires the room temperatures 1 to 6 which are the room temperature distribution in the relearning period [2020.8.1. 00:00:00 to 2020-8-1 23:50:00] as the second explained variables Y" for learning.

In step S112, the CPU 11 as the second learning unit 122 generates a second learned model M' by subjecting the first learned model M acquired in step S108 to relearning on the basis of the second learning data acquired in step S110.

Specifically, the CPU 11 generates a second learned model M' in the following expression obtained by causing parameters of the eighth to tenth layers of the first learned model M to be relearned such that a mean squared error between the explained variable ^Y" output from the second learned model M' when the second explanatory variable X" for learning is input to the second learned model M' during learning and the second explained variable Y" for learning, calculated according to the above expression (2), is minimized.

[Math. 7]

$$M'=\{l_1, l_2, \ldots, l'_{n-n'+1}, \ldots, l'_n\}$$

The CPU 11 stores the generated second learned model M' in the second learned model storage unit 108.

By executing the learning process routine in Fig. 3, the second learned model M' is stored in the second learned model storage unit 108 and used in an estimation process that will be described later.

Next, the learning device 10 of the present example executes the estimation process illustrated in Fig. 4.

In step S200, the CPU 11 as the acquisition unit 124 acquires an estimation explanatory variable and an estimation period from the setting value storage unit 100 as setting values.

For example, the CPU 11 acquires a representative point room temperature as the estimation explanatory variable. The CPU 11 acquires [2020-08-02 00:00:00, 2020-09-30 23:50:00] as the estimated period.

In step S202, the CPU 11 as the acquisition unit 124 acquires the explanatory variable X that is an estimation target from the estimation data storage unit 110 on the basis of the setting values acquired in step S200. Specifically, the CPU 11 acquires data of the representative point room temperatures in the estimation period from 2020.8.2. 00:00:00 to 2020.9.30. 23:50:00 in the details in Fig. 8 as the explanatory variable X that is an estimation target.

In step S204, the CPU 11 as the acquisition unit 124 acquires the second learned model M' from the second learned model storage unit 108.

In step S206, the CPU 11 as the estimation unit 126 inputs the explanatory variable X that is an estimation target acquired in step S202 to the second learned model M' acquired in step S204 to acquire the explained variable ^Y for the explanatory variable X that is an estimation target according to the above Expression (3).

The CPU 11 stores the explained variable ^ Y for the estimation target explanatory variable X in the estimation result storage unit 112. The explained variable ^Y for the explanatory variable X that is an estimation target is an estimation result as illustrated in Fig. 9. As illustrated in Fig. 9, estimation results of the room temperatures 1 to 6 that are the explained variables ^Y is stored in the estimation result storage unit 112.

Example 2

In Example 2, a case where relearning and evaluation are performed by using a plurality of first learned models will be described as an example.

In Example 2, after initial learning is performed with some patterns, relearning and evaluation are performed by using a plurality of first learned models at the time of relearning.

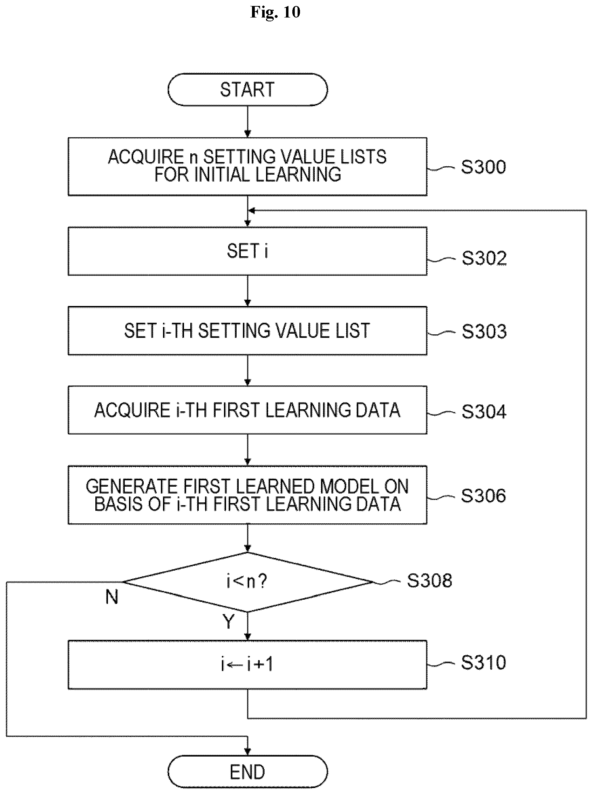

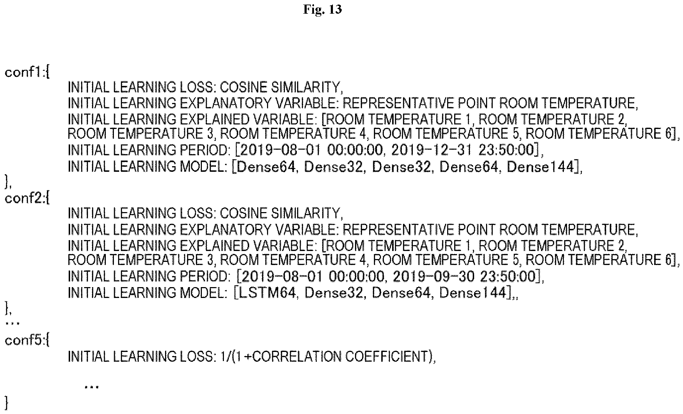

A configuration of a learning device described in Example 2 is similar to that of the learning device 10 of the above embodiment. An operation of the learning device described in Example 2 will be described by using the process flows illustrated in Figs. 10 to 12. In Example 2, it is assumed that a setting file as illustrated in Fig. 13 is stored in the setting value storage unit 100.

Hereinafter, the operation of the learning device of the present example will be described with reference to Figs. 10 to 12.

Initial learning of the learning model is executed according to the process flow in Fig. 10.

In step S300, the CPU 11 as the first learning unit 120 acquires setting value lists of n = 5 from the setting file stored in the setting value storage unit 100. As illustrated in Fig. 13, each setting value list includes information regarding an initial learning loss, an initial learning explained variable, an initial learning explanatory variable, an initial learning period, and an initial learning model. The initial learning model is a learning model subjected to initial learning. The information regarding the initial learning model includes configuration information of a machine learning model such as a neural network that is a learning model used in initial learning. For example, "Dense" and "LSTM" illustrated in Fig. 13 are information indicating the type of layer of the neural network.

Fig. 13 illustrates a plurality of setting value lists conf1, conf2, ⋯, and conf5. In Example 1, a plurality of first learned models are respectively generated on the basis of the plurality of setting value lists.

In step S302, the CPU 11 as the first learning unit 120 sets i representing the order of the setting value list. In addition, i = 1 is set for the first time, and the first setting value list is a processing target in step S303 that will be described later.

In step S303, the CPU 11 as the first learning unit 120 sets an i-th setting value list from the n setting value lists acquired in step S300 as a processing target.

In step S304, the CPU 11 as the first learning unit 120 acquires i-th first learning data from the first learning data storage unit 102.

Specifically, the CPU 11 acquires a pair of the first explanatory variable X' for learning and the first explained variable Y' for learning, which are the i-th first learning data, from the first learning data storage unit 102.

In step S306, the CPU 11 as the first learning unit 120 generates an i-th first learned model on the basis of the i-th first learning data acquired in step S304.

Specifically, the CPU 11 generates the i-th first learned model M' such that a correlation between the first explained variable Y' for learning and the first explained variable ^Y' output from the i-th first learned model M' is maximized. The neural network that is the i-th first learned model M' is expressed by the following expression.

[Math. 8]

$$M_i = \{l_1, l_2, \ldots, l_{10}\}$$

The CPU 11 stores the i-th first learned model M' in the first learned model storage unit 104.

In step S308, the CPU 11 as the first learning unit 120 determines whether or not i < n is satisfied. In a case where i < n is satisfied, the process proceeds to step S310. On the other hand, in a case where i < n is not satisfied, the process is ended.

In step S310, the CPU 11 as the first learning unit 120 sets i again to i+1, and proceeds to step S302.

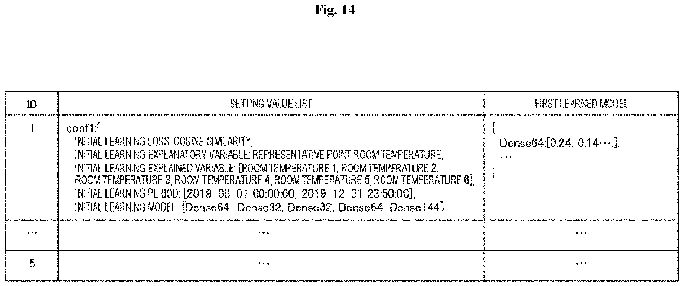

The processes in steps S300 to S310 are repeatedly performed until i is set from 1 to 5. Consequently, n first learned models are generated on the basis of the n setting value files. Thus, as illustrated in Fig. 14, five first learned models are stored in the first learned model storage unit 104.

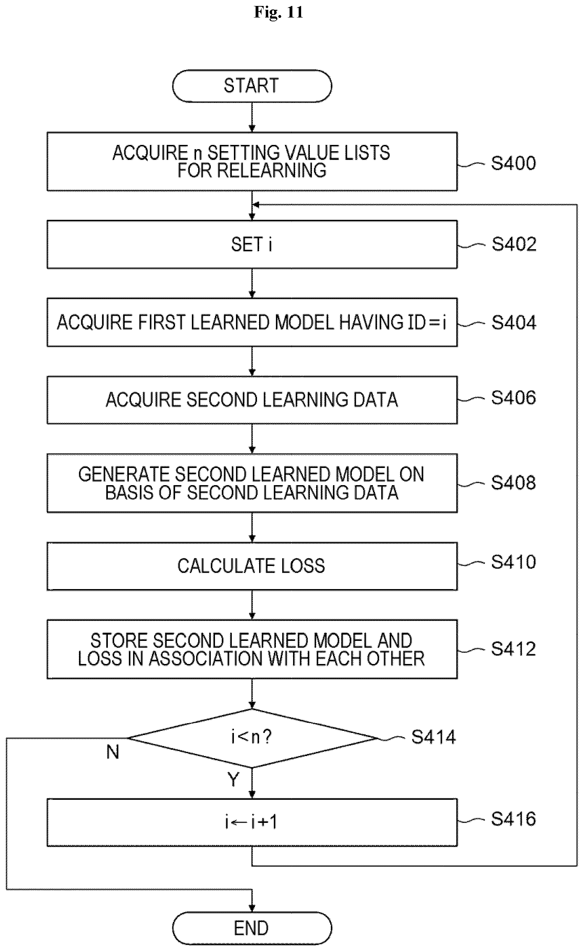

Next, relearning of the first learned model will be described. Relearning of the first learned model is executed according to the process flow in Fig. 11.

In step S400, the CPU 11 as the second learning unit 122 acquires n setting value lists for relearning from the setting value storage unit 100.

In step S402, the CPU 11 as the second learning unit 122 sets i representing the order of the setting value list. In addition, i = 1 is set for the first time, and the first setting value list is a processing target in each process that will be described later.

In step S404, the CPU 11 as the second learning unit 122 acquires a first learned model $M_i$ having the ID = i from the first learned model storage unit 104.

In step S406, the CPU 11 as the second learning unit 122 acquires the second learning data from the second learning data storage unit 106 on the basis of the i-th setting value list. The second learning data is a pair of a second explanatory variable $X_i$" for learning and a second explained variable $Y_i$" for learning.

In step S408, the CPU 11 as the second learning unit 122 generates a second learned model by using the second learning data acquired in step S406 on the basis of the i-th setting value list.

Specifically, the CPU 11 generates a second learned model $M_i$' in the following expression obtained by causing parameters of the $(n_i'+1)$-th to $n_i$-th layers of the i-th first learned model $M_i$ to be relearned such that an error between the explained variable ^Y" output from the second learned model M' during learning and the second explained variable Y" for learning, calculated according to the following expression, is maximized. In addition, $n_i'$ is a relearning start layer in the setting value file, and is 3 in the present example.

[Math. 9]

$$\widehat{Y''} = M'X''$$

$$M'_i = \{l_1, l_2, \ldots, l'_{n-n'_i+1}, \ldots, l'_n\}$$

The CPU 11 stores the *second learned model* $M_i'$ in the second learned model storage unit 108.

In step S410, the CPU 11 as the second learning unit 122 calculates a loss of the second learned model $M_i'$ generated in step S408.

Specifically, the CPU 11 calculates a difference between the second explained variable $^\wedge Y_i''$ output from the second learned model $M_i'$ and the second explained variable $Y''$ for learning as a loss $loss_i$ according to the following expression.

[Math. 10]

$$loss_i = |\widehat{Y''}_i - Y''|$$

In step S412, the CPU 11 as the second learning unit 122 stores the second learned model $M_i'$ generated in step S408 and the loss $loss_i$ calculated in step S410 in association with each other in the second learned model storage unit 108.

In step S414, the CPU 11 as the second learning unit 122 determines whether or not i < n is satisfied. In a case where i < n is satisfied, the process proceeds to step S416. On the other hand, in a case where i < n is not satisfied, the process is ended.

In step S416, the CPU 11 as the second learning unit 122 sets i again to i+1, and proceeds to step S402.

The processes in steps S400 to S416 are repeatedly performed until i is set from 1 to 5. Consequently, five second learned models are generated on the basis of the five setting value files.

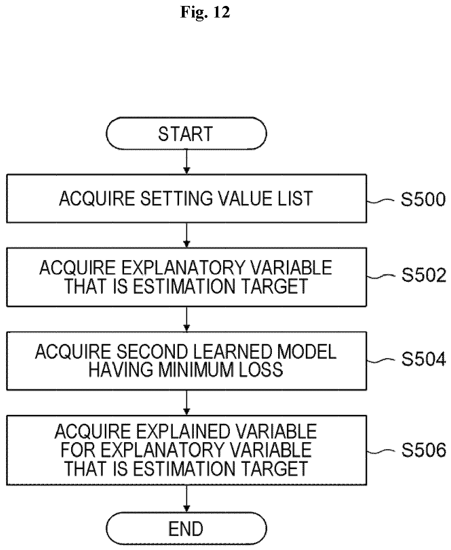

Next, an estimation process will be described. According to the process flow in Fig. 12, the estimation process is executed.

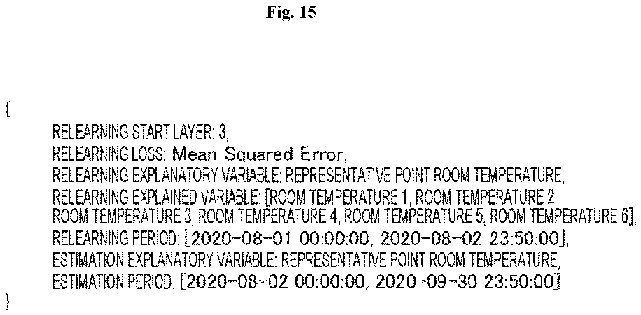

In step S500, the CPU 11 as the acquisition unit 124 acquires a setting value list illustrated in Fig. 15.

In step S502, the CPU 11 as the acquisition unit 124 acquires the explanatory variable X that is an estimation target from the estimation data storage unit 110 on the basis of an estimation explanatory variable and an estimation period in the setting value list acquired in step S500.

In step S504, the CPU 11 as the acquisition unit 124 acquires a second learned model M* having the minimum loss $loss$ from the second learning data storage unit 106.

In step S506, the CPU 11 as the estimation unit 126 acquires the explained variable $^\wedge Y$ for the explanatory variable X that is an estimation target by inputting the explanatory variable X that is an estimation target acquired in step S502 to the second learned model M* acquired in step S504 according to the following expression. The CPU 11 stores the explained variable $^\wedge Y$ in the estimation result storage unit 112.

[Math. 11]

$$\widehat{Y} = M^*X$$

In Example 2, the case where initial learning of the plurality of patterns is performed and the first learned model having the smallest loss in the initial learning is used in relearning has been described as an example, but the disclosed technology is not limited thereto. For example, in relearning, a plurality of setting value lists may be stored in a setting file, relearning may be performed with a plurality of patterns, and the estimation unit 126 may perform estimation by using a second learned model having the smallest loss among the plurality of patterns.

The various processes executed by the CPU reading software (program) in the above embodiment may be executed by various processors other than the CPU. Examples of the processors in this case include a programmable logic device (PLD) of which a circuit configuration can be changed after manufacturing, such as a field-programmable gate array (FPGA), and a dedicated electric circuit that is a processor having a circuit configuration exclusively designed for executing a specific process, such as an application specific integrated circuit (ASIC). The various processes may be executed by one of the various processors or may be executed by a combination of two or more processors of the same type or different types (for example, a combination of a plurality of FPGAs or a combination of a CPU and an FPGA). More specifically, a hardware structure of the various processors is an electric circuit in which circuit elements such as semiconductor elements are combined.

In each of the above embodiments, the aspect in which the learning process program and the estimation process program are stored (installed) in advance in the storage 14 has been described, but the disclosed technology is not limited thereto. The programs may be provided by being stored in a non-transitory storage medium such as a compact disk read only memory (CD-ROM), a digital versatile disk read only memory (DVD-ROM), and a Universal Serial Bus (USB) memory. The programs may be downloaded from an external device via a network.

In the above embodiment, the case where the learning device 10 executes the learning process and the estimation process has been described as an example, but the disclosed technology is not limited thereto. For example, the learning process and the estimation process may be executed by separate devices. In this case, for example, the entire system may be configured by a learning device that executes a learning process and an estimation device that executes an estimation process.

Regarding the above embodiments, the following appendixes are further disclosed.

(Appendix 1)

A learning device including:

a memory; and
at least one processor connected to the memory; in which
the processor
generates a first learned model by subjecting a learning model to learning such that a correlation coefficient between a first explanatory variable for learning and an explained variable output from the learning model is maximized when the learning model that outputs an explained variable in a case where an explanatory variable is input is subjected to learning on the basis of first learning data representing a pair of the first explanatory variable for learning and a first explained variable for learning, and
generates a second learned model by subjecting the first learned model to relearning such that an error between a second explanatory variable for learning and an explained variable output from the first learned model is minimized when the first learned model is subjected to the relearning on the basis of second learning data representing a pair of the second explanatory variable for learning and a second explained variable for learning.

(Appendix 2)

A non-transitory storage medium storing a program executable by a computer to execute a learning process, the learning process including:

generating a first learned model by subjecting a learning model to learning such that a correlation coefficient between a first explanatory variable for learning and an explained variable output from the learning model is maximized when the learning model that outputs an explained variable in a case where an explanatory variable is input is subjected to learning on the basis of first learning data representing a pair of the first explanatory variable for learning and a first explained variable for learning; and
generating a second learned model by subjecting the first learned model to relearning such that an error between a second explanatory variable for learning and an explained variable output from the first learned model is minimized when the first learned model is subjected to the relearning on the basis of second learning data representing a pair of the second explanatory variable for learning and a second explained variable for learning.

Reference Signs List

10      Learning device
100     Setting value storage unit
102     First learning data storage unit
104     First learned model storage unit
106     Second learning data storage unit
108     Second learned model storage unit

110     Estimation data storage unit
112     Estimation result storage unit
120     First learning unit
122     Second learning unit
124     Acquisition unit
126     Estimation unit

**Claims**

1. A learning method of causing a computer to execute processes of:

   generating a first learned model by subjecting a learning model to learning such that a correlation coefficient between a first explained variable for learning and an explained variable output from the learning model is maximized when the learning model that outputs an explained variable in a case where an explanatory variable is input is subjected to learning on the basis of first learning data representing a pair of a first explanatory variable for learning and the first explained variable for learning; and
   generating a second learned model by subjecting the first learned model to relearning such that an error between a second explained variable for learning and an explained variable output from the first learned model is minimized when the first learned model is subjected to the relearning on the basis of second learning data representing a pair of a second explanatory variable for learning and the second explained variable for learning.

2. The learning method according to claim 1, further comprising:

   generating the first learned model by subjecting the learning model to learning such that a function $1/(r+1)$ including the correlation coefficient r is minimized when the learning model is subjected to learning such that the correlation coefficient is maximized; and
   generating the second learned model by subjecting the first learned model to learning such that a mean squared error between the second explained variable for learning and the explained variable output from the first learned model is minimized when the first learned model is subjected to relearning such that the error is minimized.

3. The learning method according to claim 1 or 2, wherein
   when the first learned model is subjected to relearning such that the error is minimized, a part of parameters of the first learned model are fixed and parameters different from the part of parameters of the first learned model are changed to generate the second learned model.

4. The learning method according to any one of claims 1 to 3, wherein
   the learning model is a multilayer neural network.

5. An estimation method of causing a computer to execute processes of:

   acquiring an explanatory variable that is an estimation target; and
   acquiring an explained variable for the explanatory variable that is an estimation target by inputting the explanatory variable that is an estimation target to the second learned model generated by using the learning method according to any one of claims 1 to 4.

6. A learning device comprising:

   a first learning unit that generates a first learned model by subjecting a learning model to learning such that a correlation coefficient between a first explained variable for learning and an explained variable output from the learning model is maximized when the learning model that outputs an explained variable in a case where an explanatory variable is input is subjected to learning on the basis of first learning data representing a pair of a first explanatory variable for learning and the first explained variable for learning; and
   a second learning unit that generates a second learned model by subjecting the first learned model to relearning such that an error between a second explained variable for learning and an explained variable output from the first learned model is minimized when the first learned model is subjected to the relearning on the basis of second learning data representing a pair of a second explanatory variable for learning and the second explained variable for learning.

7. An estimation device comprising:

    an acquisition unit that acquires an explanatory variable that is an estimation target; and
    an estimation unit that acquires an explained variable for the explanatory variable that is an estimation target by inputting the explanatory variable that is an estimation target to the second learned model generated by the learning device according to claim 6.

8. A program for causing a computer to execute the learning method according to any one of claims 1 to 4 or the estimation method according to claim 5.

**Fig. 1**

**Fig. 2**

10

| | |
|---|---|
| FIRST LEARNING UNIT 120 | SETTING VALUE STORAGE UNIT 100 |
| SECOND LEARNING UNIT 122 | FIRST LEARNING DATA STORAGE UNIT 102 |
| ACQUISITION UNIT 124 | FIRST LEARNED MODEL STORAGE UNIT 104 |
| ESTIMATION UNIT 126 | SECOND LEARNING DATA STORAGE UNIT 106 |
| | SECOND LEARNED MODEL STORAGE UNIT 108 |
| | ESTIMATION DATA STORAGE UNIT 110 |
| | ESTIMATION RESULT STORAGE UNIT 112 |

**Fig. 3**

```
                    ┌──────────────┐
                    │    START     │
                    └──────┬───────┘
                           │
                           ▼
        ┌─────────────────────────────────────────┐
        │ ACQUIRE SETTING VALUES FOR INITIAL LEARNING │───── S100
        └─────────────────────┬───────────────────┘
                              │
                              ▼
        ┌─────────────────────────────────────────┐
        │        ACQUIRE FIRST LEARNING DATA        │───── S102
        └─────────────────────┬───────────────────┘
                              │
                              ▼
        ┌─────────────────────────────────────────┐
        │       GENERATE FIRST LEARNED MODEL ON     │───── S104
        │        BASIS OF FIRST LEARNING DATA       │
        └─────────────────────┬───────────────────┘
                              │
                              ▼
        ┌─────────────────────────────────────────┐
        │    ACQUIRE SETTING VALUES FOR RELEARNING  │───── S106
        └─────────────────────┬───────────────────┘
                              │
                              ▼
        ┌─────────────────────────────────────────┐
        │         ACQUIRE FIRST LEARNED MODEL       │───── S108
        └─────────────────────┬───────────────────┘
                              │
                              ▼
        ┌─────────────────────────────────────────┐
        │        ACQUIRE SECOND LEARNING DATA       │───── S110
        └─────────────────────┬───────────────────┘
                              │
                              ▼
        ┌─────────────────────────────────────────┐
        │      GENERATE SECOND LEARNED MODEL ON     │───── S112
        │       BASIS OF SECOND LEARNING DATA       │
        └─────────────────────┬───────────────────┘
                              │
                              ▼
                    ┌──────────────┐
                    │     END      │
                    └──────────────┘
```

**Fig. 4**

```
          ┌─────────────┐
          │    START    │
          └──────┬──────┘
                 ↓
    ┌───────────────────────────┐
    │   ACQUIRE SETTING VALUES  │──── S200
    └─────────────┬─────────────┘
                  ↓
    ┌───────────────────────────┐
    │ ACQUIRE EXPLANATORY VARIABLE│──── S202
    │  THAT IS ESTIMATION TARGET │
    └─────────────┬─────────────┘
                  ↓
    ┌───────────────────────────┐
    │ ACQUIRE SECOND LEARNED MODEL│──── S204
    └─────────────┬─────────────┘
                  ↓
    ┌───────────────────────────┐
    │  ACQUIRE EXPLAINED VARIABLE │
    │  FOR EXPLANATORY VARIABLE  │──── S206
    │  THAT IS ESTIMATION TARGET │
    └─────────────┬─────────────┘
                  ↓
          ┌─────────────┐
          │     END     │
          └─────────────┘
```

**Fig. 5**

INITIAL LEARNING LOSS: 1/(CORRELATION COEFFICIENT+1),
INITIAL LEARNING EXPLANATORY VARIABLE: REPRESENTATIVE POINT ROOM TEMPERATURE,
INITIAL LEARNING EXPLAINED VARIABLE: [ROOM TEMPERATURE 1, ROOM TEMPERATURE 2,
ROOM TEMPERATURE 3, ROOM TEMPERATURE 4, ROOM TEMPERATURE 5, ROOM TEMPERATURE 6],
INITIAL LEARNING PERIOD: [2019-08-01 00:00:00, 2019-12-31 23:50:00],
NUMBER OF INITIAL LEARNING LAYERS: 10,
RELEARNING START LAYER: 3,
RELEARNING LOSS: Mean Squared Error,
RELEARNING EXPLANATORY VARIABLE: REPRESENTATIVE POINT ROOM TEMPERATURE,
RELEARNING EXPLAINED VARIABLE: [ROOM TEMPERATURE 1, ROOM TEMPERATURE 2,
ROOM TEMPERATURE 3, ROOM TEMPERATURE 4, ROOM TEMPERATURE 5, ROOM TEMPERATURE 6],
RELEARNING PERIOD: [2020-08-01 00:00:00, 2020-08-02 23:50:00],
ESTIMATION EXPLANATORY VARIABLE: REPRESENTATIVE POINT ROOM TEMPERATURE
ESTIMATION PERIOD: [2020-08-02 00:00:00, 2020-09-30 23:50:00]

**Fig. 6**

| DATE AND TIME | REPRESENTATIVE POINT ROOM TEMPERATURE | ROOM TEMPERATURE 1 | ROOM TEMPERATURE 2 | ROOM TEMPERATURE 3 | ROOM TEMPERATURE 4 | ROOM TEMPERATURE 5 | ROOM TEMPERATURE 6 |
|---|---|---|---|---|---|---|---|
| 2019.8.1. 00:00:00 | 23.1 | 25.6 | 26.9 | 27.1 | 26.7 | 25.8 | 27.6 |
| 2019.8.1. 00:10:00 | 23.2 | 25.6 | 26.8 | 27.4 | 26.8 | 25.5 | 27.7 |
| ... | ... | ... | ... | ... | ... | ... | ... |
| 2019.12.31 23:50:00 | 17.6 | 18.1 | 19.2 | 18.5 | 18.9 | 17.7 | 20.0 |

Fig. 7

| DATE AND TIME | REPRESENTATIVE POINT ROOM TEMPERATURE | ROOM TEMPERATURE 1 | ROOM TEMPERATURE 2 | ROOM TEMPERATURE 3 | ROOM TEMPERATURE 4 | ROOM TEMPERATURE 5 | ROOM TEMPERATURE 6 |
|---|---|---|---|---|---|---|---|
| 2020.8.1. 00:00:00 | 24.2 | 23.6 | 22.9 | 25.3 | 23.7 | 24.8 | 24.6 |
| 2020.8.1. 00:10:00 | 24.4 | 23.7 | 23.1 | 25.4 | 23.8 | 24.8 | 24.7 |
| … | … | … | … | … | … | … | … |
| 2020.8.1 23:50:00 | 25.4 | 24.7 | 24.5 | 26.0 | 24.9 | 26.7 | 25.7 |

Fig. 8

| DATE AND TIME | REPRESENTATIVE POINT ROOM TEMPERATURE |
|---|---|
| 2020.8.1. 00:00:00 | 24.1 |
| 2020.8.1. 00:10:00 | 24.0 |
| ... | ... |
| 2020.9.30 23:50:00 | 21.8 |

Fig. 9

| DATE AND TIME | ROOM TEMPERATURE 1 | ROOM TEMPERATURE 2 | ROOM TEMPERATURE 3 | ROOM TEMPERATURE 4 | ROOM TEMPERATURE 5 | ROOM TEMPERATURE 6 |
|---|---|---|---|---|---|---|
| 2020.8.1. 00:00:00 | 23.3 | 22.9 | 25.1 | 23.5 | 24.5 | 24.7 |
| 2020.8.1. 00:10:00 | 23.4 | 23.0 | 25.3 | 23.6 | 24.6 | 24.7 |
| ... | ... | ... | ... | ... | ... | ... |
| 2020.11.30 23:50:00 | 20.2 | 19.5 | 20.0 | 19.4 | 20.7 | 19.9 |

**Fig. 10**

START

ACQUIRE n SETTING VALUE LISTS
FOR INITIAL LEARNING — S300

SET i — S302

SET i-TH SETTING VALUE LIST — S303

ACQUIRE i-TH FIRST LEARNING DATA — S304

GENERATE FIRST LEARNED MODEL ON
BASIS OF i-TH FIRST LEARNING DATA — S306

i < n ? — S308

N

Y

i ← i+1 — S310

END

**Fig. 11**

```
            ┌─────────────┐
            │    START    │
            └──────┬──────┘
                   │
   ┌───────────────────────────────────┐
   │  ACQUIRE n SETTING VALUE LISTS     │──── S400
   │         FOR RELEARNING             │
   └───────────────┬───────────────────┘
                   │◄──────────────────────────┐
   ┌───────────────────────────────────┐       │
   │             SET i                  │──── S402
   └───────────────┬───────────────────┘       │
                   │                            │
   ┌───────────────────────────────────┐       │
   │ ACQUIRE FIRST LEARNED MODEL HAVING ID=i │── S404
   └───────────────┬───────────────────┘       │
                   │                            │
   ┌───────────────────────────────────┐       │
   │    ACQUIRE SECOND LEARNING DATA    │──── S406
   └───────────────┬───────────────────┘       │
                   │                            │
   ┌───────────────────────────────────┐       │
   │ GENERATE SECOND LEARNED MODEL ON   │──── S408
   │  BASIS OF SECOND LEARNING DATA     │       │
   └───────────────┬───────────────────┘       │
                   │                            │
   ┌───────────────────────────────────┐       │
   │          CALCULATE LOSS            │──── S410
   └───────────────┬───────────────────┘       │
                   │                            │
   ┌───────────────────────────────────┐       │
   │  STORE SECOND LEARNED MODEL AND    │──── S412
   │  LOSS IN ASSOCIATION WITH EACH OTHER │     │
   └───────────────┬───────────────────┘       │
                   │                            │
              ╱─────────╲                       │
         N   ╱   i<n?    ╲ ──── S414            │
        ◄───╲            ╱                      │
             ╲─────────╱                        │
                  │ Y                           │
   ┌───────────────────────────────────┐       │
   │            i ← i+1                 │──── S416 ─┘
   └───────────────────────────────────┘
                  │
            ┌─────────────┐
            │     END     │
            └─────────────┘
```

Fig. 12

```
          ┌─────────────┐
          │    START    │
          └──────┬──────┘
                 │
                 ▼
    ┌──────────────────────────────┐
    │  ACQUIRE SETTING VALUE LIST   │───── S500
    └──────────────┬───────────────┘
                   │
                   ▼
    ┌──────────────────────────────┐
    │  ACQUIRE EXPLANATORY VARIABLE │───── S502
    │   THAT IS ESTIMATION TARGET   │
    └──────────────┬───────────────┘
                   │
                   ▼
    ┌──────────────────────────────┐
    │  ACQUIRE SECOND LEARNED MODEL │───── S504
    │      HAVING MINIMUM LOSS      │
    └──────────────┬───────────────┘
                   │
                   ▼
    ┌──────────────────────────────┐
    │   ACQUIRE EXPLAINED VARIABLE  │
    │   FOR EXPLANATORY VARIABLE    │───── S506
    │   THAT IS ESTIMATION TARGET   │
    └──────────────┬───────────────┘
                   │
                   ▼
          ┌─────────────┐
          │     END     │
          └─────────────┘
```

Fig. 13

```
conf1:{
        INITIAL LEARNING LOSS: COSINE SIMILARITY,
        INITIAL LEARNING EXPLANATORY VARIABLE: REPRESENTATIVE POINT ROOM TEMPERATURE,
        INITIAL LEARNING EXPLAINED VARIABLE: [ROOM TEMPERATURE 1, ROOM TEMPERATURE 2,
        ROOM TEMPERATURE 3, ROOM TEMPERATURE 4, ROOM TEMPERATURE 5, ROOM TEMPERATURE 6],
        INITIAL LEARNING PERIOD: [2019-08-01 00:00:00, 2019-12-31 23:50:00],
        INITIAL LEARNING MODEL: [Dense64, Dense32, Dense32, Dense64, Dense144],
},
conf2:{
        INITIAL LEARNING LOSS: COSINE SIMILARITY,
        INITIAL LEARNING EXPLANATORY VARIABLE: REPRESENTATIVE POINT ROOM TEMPERATURE,
        INITIAL LEARNING EXPLAINED VARIABLE: [ROOM TEMPERATURE 1, ROOM TEMPERATURE 2,
        ROOM TEMPERATURE 3, ROOM TEMPERATURE 4, ROOM TEMPERATURE 5, ROOM TEMPERATURE 6],
        INITIAL LEARNING PERIOD: [2019-08-01 00:00:00, 2019-09-30 23:50:00],
        INITIAL LEARNING MODEL: [LSTM64, Dense32, Dense64, Dense144],,
},
...
conf5:{
        INITIAL LEARNING LOSS: 1/(1+CORRELATION COEFFICIENT),

            ...
}
```

Fig. 14

| ID | SETTING VALUE LIST | FIRST LEARNED MODEL |
|---|---|---|
| 1 | conf1:{<br>INITIAL LEARNING LOSS: COSINE SIMILARITY,<br>INITIAL LEARNING EXPLANATORY VARIABLE: REPRESENTATIVE POINT ROOM TEMPERATURE,<br>INITIAL LEARNING EXPLAINED VARIABLE: [ROOM TEMPERATURE 1, ROOM TEMPERATURE 2,<br>ROOM TEMPERATURE 3, ROOM TEMPERATURE 4, ROOM TEMPERATURE 5, ROOM TEMPERATURE 6],<br>INITIAL LEARNING PERIOD: [2019-08-01 00:00:00, 2019-12-31 23:50:00],<br>INITIAL LEARNING MODEL: [Dense64, Dense32, Dense32, Dense64, Dense144] | {<br>  Dense64:[0.24, 0.14···],<br>  ···<br>} |
| ··· | ··· | ··· |
| 5 | ··· | ··· |

Fig. 15

```
{

    RELEARNING START LAYER: 3,
    RELEARNING LOSS: Mean Squared Error,
    RELEARNING EXPLANATORY VARIABLE: REPRESENTATIVE POINT ROOM TEMPERATURE,
    RELEARNING EXPLAINED VARIABLE: [ROOM TEMPERATURE 1, ROOM TEMPERATURE 2,
    ROOM TEMPERATURE 3, ROOM TEMPERATURE 4, ROOM TEMPERATURE 5, ROOM TEMPERATURE 6],
    RELEARNING PERIOD: [2020-08-01 00:00:00, 2020-08-02 23:50:00],
    ESTIMATION EXPLANATORY VARIABLE: REPRESENTATIVE POINT ROOM TEMPERATURE,
    ESTIMATION PERIOD: [2020-08-02 00:00:00, 2020-09-30 23:50:00]

}
```

<div align="center">

**INTERNATIONAL SEARCH REPORT**

</div>

| | International application No. |
|---|---|
| | PCT/JP2021/021813 |

| A. CLASSIFICATION OF SUBJECT MATTER |
|---|
| G06N 20/00(2019.01)i |
| FI: G06N20/00 130 |
| |
| According to International Patent Classification (IPC) or to both national classification and IPC |

| B. FIELDS SEARCHED |
|---|
| Minimum documentation searched (classification system followed by classification symbols) |
| G06N20/00 |

| Documentation searched other than minimum documentation to the extent that such documents are included in the fields searched | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

| Electronic data base consulted during the international search (name of data base and, where practicable, search terms used) |
|---|
| |

**C. DOCUMENTS CONSIDERED TO BE RELEVANT**

| Category* | Citation of document, with indication, where appropriate, of the relevant passages | Relevant to claim No. |
|---|---|---|
| A | WO 2021/074990 A1 (MITSUBISHI ELECTRIC CORP) 22 April 2021 (2021-04-22) entire text | 1-8 |
| A | US 2014/0201126 A1 (ZADEH, Lotfi A.) 17 July 2014 (2014-07-17) entire text | 1-8 |
| A | 森 郁海等, AI/IoT ソリューションへの転移学習適用における学習モデル検索システムの提案と評価, 情報処理学会 シンポジウム マルチメディア通信と分散処理ワークショップ 2019, November 2019 (accession date), entire text, (MORI, Ikumi et al.), non-official translation (Proposal and evaluation of learning model search system for application of transfer learning to AI and IoT solutions. Distributed Processing System Workshop 2019 of Information Processing Society of Japan.) | 1-8 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 23 August 2021 (23.08.2021) | 31 August 2021 (31.08.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

Information on patent family members

International application No.

PCT/JP2021/021813

| Patent Documents referred in the Report | Publication Date | Patent Family | Publication Date |
|---|---|---|---|
| WO 2021/074990 A1 | 22 Apr. 2021 | (Family: none) | |
| US 2014/0201126 A1 | 17 Jul. 2014 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YOSHIKAZU NIGAKI ; KATSUFUMI INOUE ; MICHIFUMI YOSHIOKA.** The DNN Learning Method for Few Training Data via Knowledge Transfer. *IEEJ Journal C,* 2020, vol. 140 (6), 664-672